# EUROPEAN PATENT APPLICATION

(11) **EP 2 239 996 A2**
(43) Date of publication of application: **13.10.2010**
(21) Application number: 09171244.8
(22) Date of filing: 24.09.2009
(51) Int. Cl.: H05B 33/08

(54) **AC LED module with a current regulative diode**

(30) Priority: 10.04.2009 TW 98112006
(71) Applicant: Advanced Connectek Inc., Hsin-Tien City Taipei Hsien (TW)
(72) Inventor: Cheng, Ching-Chi, Hsin-Tien (TW); Chien, Wen-Hsiang, Hsin-Tien (TW)
(74) Representative: Ihle, Kornelia

(57) **Abstract**

An AC LED module includes a substrate, a bridge rectifier unit a constant current unit and an LED chip set. The bridge rectifier unit mounted on the substrate further includes an output and an input coupled with an AC source. The constant current unit, mounted on the substrate and coupled with the output of the bridge rectifier unit, further includes at least one current regulative diode. The LED chip set mounted also on the substrate is electrically coupled with the constant current unit.

## Description

### BACKGROUND OF THE INVENTION

### (1) Field of the Invention

The invention relates to an AC (alternative current) LED (light-emitted diode) module, and more particularly to the AC LED module that contains a current regulative diode (CRD).

### (2) Description of the Prior Art

Energy shortage in recent years motivates a trend in using more efficient products. Owing to the high conversion efficiency, short reaction time, high glimmer frequency, energy-saving, etc., the LED has become popular to better illumination equipments.

In the art, the traditional LED can only be energized by the direct current (DC), especially in the field of transportation industry in which most of vehicles and crafts are DC-driven.

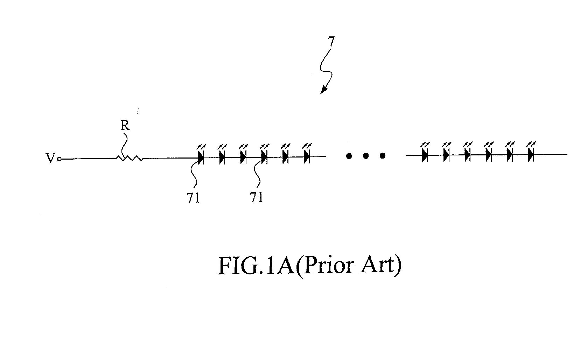

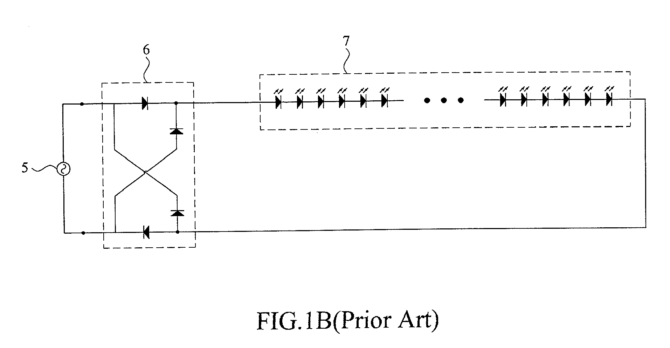

Refer now to FIG.1A and FIG.1B for a typical design of an AC LED serial set 7 having plural LEDs 71 in series and a corresponsive circuit thereto. To apply an AC source 5, a rectifier 6, for example a bridge rectifier as shown, is introduced to parallel connect with the AC LED serial set 7. However, though the AC source 5 can be successfully applied thereby, yet the formatted AC LED module (including the rectifier 6) as well as the AC LEDs 71 is vulnerable to meet a glimmer problem (or say a flicker problem). Such a glimmer problem in the AC LEDs 71 is mainly caused by voltage fluctuations in the AC source 5. Human eyes would be effected by the glimmering while the glimmering frequency locates between 1∼30Hz, even that the Human eyes can only sense the glimmering with a frequency lower than 16Hz.

Therefore, to resolve the glimmer problem of the AC LEDs so as to comfort eyes of the users, an effort thereto is definitely welcome to the art.

### SUMMARY OF THE INVENTION

It is not found in the art that an applicable resort exists to resolve the flicker problem of the AC LEDs. Hence, this invention disclosed hereinafter is designed to provide the AC LEDs a current regulative diode (CRD) so as to generate a stable constant current output for the AC LED module.

In the present invention, an AC LED module of the invention is powered by an AC source. The AC source includes a first source output and a second source output. The AC LED module includes a substrate, a LED chip set, a bridge rectifier unit, and a constant current unit. All the above-mentioned elements are combined on the substrate.

The substrate includes a positive connection point and a negative connection point, which are insulated to each other. Input ports of the bridge rectifier unit connect to the positive connection point and the negative connection point individually. Besides, with these two connection points coupled with the AC source, the bridge rectifier unit mounted on the substrate can be energized.

The bridge rectifier unit is composed by plural diodes. Two input ends of the bridge rectifier unit are coupled with the first source input and the second source input individually. Two output ends of the bridge rectifier unit are coupled with the constant current unit.

The LED chip set includes a first port and a second port. The first port electrically connects to the constant current unit, and the second port electrically connects to the second rectifier input. The constant current unit is composed by at least a CRD component, and can also contain other elements such as resistors, capacitors and inductors. The constant current unit includes a current input and a current output. The current output couples with the first port, and the current input couples with the output of the bridge rectifier unit.

When the CRD imposed the forward bias, the CRD would generate a constant current no matter how much the voltage is. Available in the market to support maximum range of the voltage are 25V, 30V and 100V such as, the E-822 Model CRD for the maximum constant voltage is 30V, so the CRD voltage would generate a 8200µA current while the forward bias is under 30V.

According to the characters of the CRD, the constant current unit works under certain voltage variation. Even if the voltage changes upon an AC input, the LEDs can still receive the constant current input. In this way, the AC LEDs will be able to resolve the flicker issues due to the voltage fluctuations of AC source.

All these objects are achieved by the AC LED module with a CRD described below.

### BRIEF DESCRIPTION OF THE DRAWINGS

The present invention will be specified with reference to its preferred embodiment illustrated in the drawings, in which:

FIG.1A is a schematic view of a conventional AC LED serial set;

FIG.1B is a schematic view of a circuit applying the AC LED serial set of FIG.1A;

FIG.2 shows a schematic view of a circuit applying a first embodiment of the AC LED module in accordance with the present invention;

FIG.3 shows a schematic view of a circuit applying a second embodiment of the AC LED module in accordance with the present invention;

FIG.4 shows a schematic view of a circuit applying a third embodiment of the AC LED module in accordance with the present invention; and

FIG.5 shows a perspective view of a finished product of the AC LED module in accordance with the present invention.

### DESCRIPTION OF THE PREFERRED EMBODIMENT

The invention disclosed herein is directed to an AC LED module with a CRD (current regulative diode). In the following description, numerous details are set forth in order to provide a thorough understanding of the present invention. It will be appreciated by one skilled in the art that variations of these specific details are possible while still achieving the results of the present invention. Under such a circumstance, there is a preferred embodiment described herein applied for the embodiment is provided to illustrate the present invention in details.

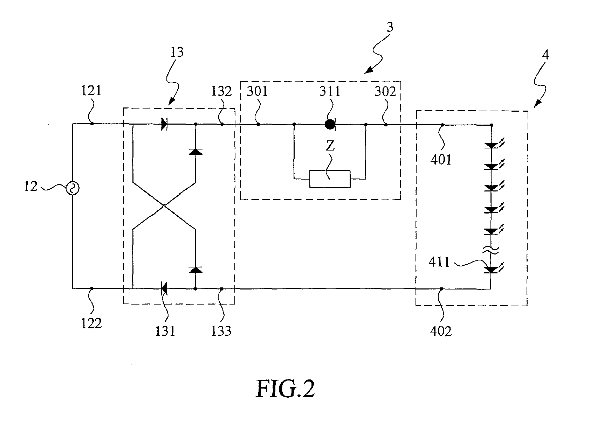

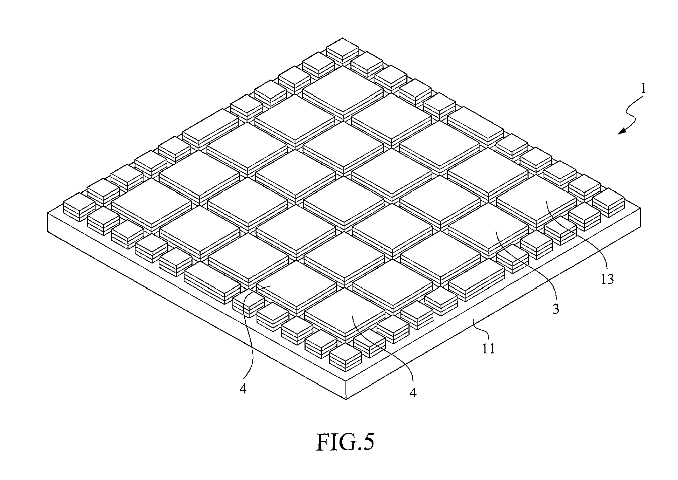

Please refer now to FIG.2 and FIG.5, in which FIG.2 shows a schematic view of a circuit that applies a first embodiment of the AC LED module with a CRD. The AC LED module 1, which contains a CRD 311, is applied to an AC source 12. The AC LED module 1 further includes a substrate 11, a bridge rectifier unit 13, a constant current module 3 and an LED chip set 4.

The AC source 12 has a first source output 121 and a second source output 122. The current flows out from the first source output 121 while the AC source 12 meets the positive half-cycle wave. The current flows out from the second source output 122 while the AC source 12 meets the negative half-cycle wave. The substrate 11 is set with a positive connection point and a negative connection point, which are insulated to each other. The positive connection point electrically coupling with the first source output 121, and the negative connection point electrically coupling with the second source output 122.

The bridge rectifier unit 13 to rectify the alternative current to direct current is composed of couples of diodes 131; in particular, LEDs. As shown in FIG.2, the bridge rectifier unit 13 contains an input, a first rectifier output 132, and a second rectifier output 133. The input couples with both the positive connection point and the negative connection point, so the alternating current of the AC source 12 would import into the bridge rectifier unit 13 through the positive and the negative connection point inputs of the substrate 11.

The constant current unit 3 contains a current input 301, a current output 302, at least one CRD 311 and an impedance Z. The impedance Z parallel connects with the CRD 311.

As shown in FIG.2, the current input 301 electrically couples with the first rectifier output 132. The positive pole of the CRD 311 electrically couples with the current input 301. The negative pole of the CRD 311 electrically couples with the current output 302. The impedance Z parallel connected with the CRD 311 can be a resistance, an inductance or a capacitance to adjudge the output current of the constant current unit 3.

Hence, while in the positive half-cycle wave, the current will flow out from the first source output 1 21 to the current output 302, through the first rectifier output 132, the current input 301 and the CRD 311. While in the negative half-cycle wave, the current will flow out through the second source output 122, the bridge rectifier unit 13, the first rectifier output 132 and the current input 301, and then flows into the CRD 311.

The characteristics of the CRD 311 are that when it receives a forward bias, no matter how its voltage fluctuates, the CRD 311 would output a constant current. Therefore, by introducing the CRD 311, the current of this instant invention will be kept substantially constant.

By providing the bridge rectifier unit 13, the AC LED module 1 can then be applied to the AC source 1 2. Through the CRD 31 1 to connect in parallel with the impedance Z, the object of outputting the constant current in the present invention to a load can be achieved. Typically, the impendence Z may further include at least an inductance, a resistance, and a capacitance (not shown in the figure).

The LED chip set 4 includes a first port 401, a second port 402, and a plurality of LEDs 411. The first port 401 electrically coupling with the current output 302 so as to provide the current to the AC LEDs 411. The second port 402 electrically couples with the second rectifier output 133 so as to form a loop containing the AC LED 411.

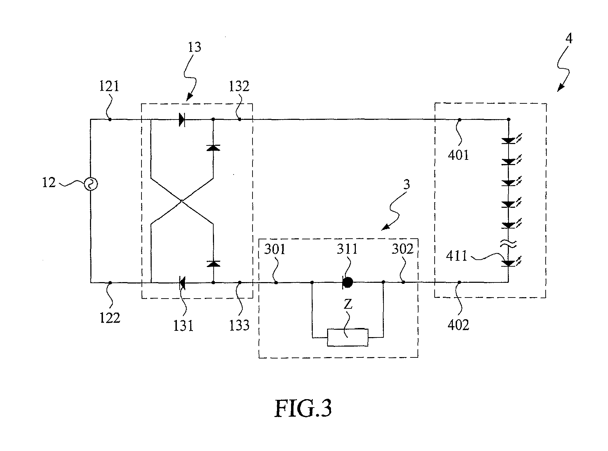

Please refer to FIG.3, which shows a schematic view of the second embodiment. As shown in FIG.3, the constant current unit 3 can be alternatively electrically coupled with the LED chip set 4 in a downstream manner compared to that shown in FIG.2. Under this circumstance, the positive pole of the CRD 311 couples with the LED chip set 4, while the negative pole of the CRD 311 couples with the second rectifier output 133. This kind of connection achieves the same effect as the first embodiment does.

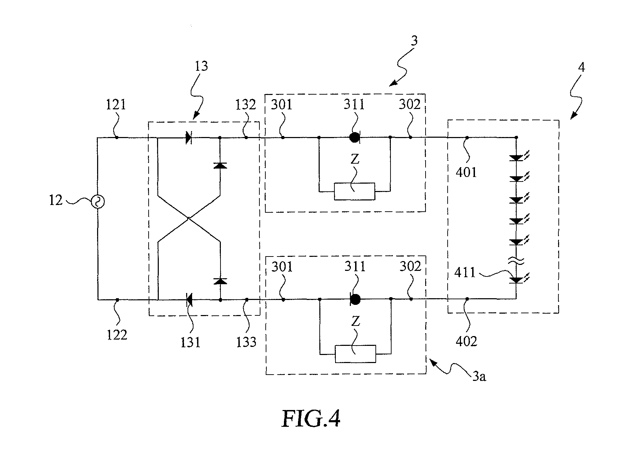

Please refer to FIG.4, which shows a schematic view of the third embodiment. In this embodiment, two constant current units 3 and 3a are included to both upstream and downstream sides of the AC LED chip set 4. Such an arrangement can also solve the aforesaid AC LED glimmer problems.

Please refer to FIG.5, which shows a schematic view of a finished product of the AC LED module 1. The substrate 11 is set with at least one LED chip set 4 (five shown in the figure). Besides, the constant current unit 3 is integrated on the substrate 11 by grain deposit.

Also, the constant current unit 3 as an individual chip can be mounted to the AC LED module 1 with a PIN connector (not shown in the figure). By extending any of the port 401 or 402 and the output of the bridge rectifier unit 13 out of the substrate 11 to couple with the constant current unit 3, then the AC LED module 1 is formed.

Upon aforesaid arrangements of the bridge rectifier unit 13, the constant current unit 3 and the CRD 311 in accordance with the present invention, the AC power generated by the AC source 12 can be rectified as a constant and stable current for energizing the LED chip set 4.

By providing the AC LED module of the present invention, the conventional glimmer problem caused to the LED sets powered by a general AC source can then be resolved. Thereby, the energy-saving AC LEDs can be then widely and effectively used to replace conventional illumination components.

Moreover, for the CRD is a tiny element by compared to the transformers and other various electronic elements, this invention can still provide a less-space-occupation product.

While the present invention has been particularly shown and described with reference to a preferred embodiment, it will be understood by those skilled in the art that various changes in form and detail may be without departing from the spirit and scope of the present invention.

## Claims

1. An AC LED module, connectable electrically with an AC source, comprising:
a substrate;
a bridge rectifier unit, mounted on the substrate, further including an output and an input to be energized by the AC source;
a constant current unit, mounted on the substrate, coupled with the output of the bridge rectifier unit, further including at least one current regulative diode; and
an LED chip set, set on the substrate, electrically coupled with the constant current unit.

2. The AC LED module according to claim 1, wherein the output of the bridge rectifier unit further includes a first rectifier output and a second rectifier output; the input of the bridge rectifier unit connecting to the first source output and the second source output of the AC source individually; the constant current unit coupling with the first rectifier output.

3. The AC LED module according to claim 1, wherein the output of the bridge rectifier unit further includes a first rectifier output and a second rectifier output; the input of the bridge rectifier unit connecting to the first source output and the second source output of the AC source individually; the constant current unit coupling with the second rectifier output.

4. The AC LED module according to claim 1, wherein the LED chip set further includes a plurality of LEDs.

5. The AC LED module according to claim 1, wherein the substrate contains a positive connection point and a negative connection point which are insulated to each other, both the positive connection point and the negative connection point are connected with the input of the bridge rectifier unit, and both the positive connection point and the negative connection point are connected to the AC source.

6. The AC LED module according to claim 1, wherein the constant current unit further includes impendence parallel to the current regulative diode.

7. The AC LED module according to claim 1, wherein the bridge rectifier unit includes a plurality of LEDs.
